# EUROPÄISCHE PATENTSCHRIFT

(11) **EP 2 460 721 B1**
(45) Veröffentlichungstag und Bekanntmachung des Hinweises auf die Patenterteilung: **12.02.2014**
(21) Anmeldenummer: 11009520.5
(22) Anmeldetag: 02.12.2011
(51) Int. Cl.: B64C 13/42, B64C 13/50

(54) **Übertragung einer Steuerungskraft**
Transfer of a steering force
Transmission d'une force de commande

(30) Priorität: 03.12.2010 DE 102010053396
(43) Veröffentlichungstag der Anmeldung: 06.06.2012
(73) Patentinhaber: EADS Deutschland GmbH, 85521 Ottobrunn (DE)
(72) Erfinder: Seifert, Jost, 85077 Manching (DE)

(56) Entgegenhaltungen:
- EP-A1- 1 865 590
- WO-A1-2008/047066
- WO-A1-2009/020452
- JP-A- 10 230 898
- US-A1- 2010 116 929

## Beschreibung

Die vorliegende Erfindung betrifft eine Übertragungsvorrichtung zur Übertragung einer Steuerungskraft in einem Fahrzeug, ein Luftfahrzeug mit einem Steuerungssystem zur Betätigung einer Steuerungskomponente, die Verwendung einer Übertragungsvorrichtung in einem Luftfahrzeug sowie ein Verfahren zum Umschalten von einem ersten Übertragungsmodus in einen zweiten Übertragungsmodus zur Betätigung einer Steuerungskomponente in einem Fahrzeug.

In Fahrzeugen werden an verschiedenen Stellen Steuerungskräfte eingesetzt, um unterschiedliche Fahrzeugkomponenten ansteuern bzw. steuern zu können. Dazu werden Übertragungsvorrichtungen verwendet, um die Erzeugung der Steuerungskraft an einem von der zu steuernden Komponente beabstandeten bzw. entfernten Ort innerhalb des Fahrzeugs vornehmen zu können. Beispielsweise werden bei Luftfahrzeugen, zum Beispiel Flugzeugen, Steuerungskräfte zum Steuern flugtechnischer Komponenten vorgesehen und mittels Übertragungsvorrichtungen an das zu steuernde Element übertragen. Je nach zu steuerndem Element ist insbesondere bei Luftfahrzeugen eine Redundanz des Steuerungssystems erwünscht, wenn nicht gar vorgeschrieben. In der US 4,296,677 ist beispielsweise ein Hydraulikzylinder beschrieben, der als Tandemzylinder ausgeführt ist, um die erforderliche Redundanz aufzuweisen.

Ein weiterer wesentlicher Stand der Technik ist durch WO 2009/020452 gegeben.

Es hat sich jedoch gezeigt, dass ein Bedarf besteht, eine Übertragungsvorrichtung zur Übertragung einer Steuerungskraft in einem Fahrzeug zur Verfügung zu stellen, die einfacher herzustellen und zudem kostengünstiger ist und dennoch eine Redundanz gewährleistet.

Dies wird durch eine Ubertragungsvorrichtung zur Übertragung einer Steuerungskraft in einem Fahrzeug, durch ein Luftfahrzeug mit einem Steuerungssystem zur Betätigung einer Steuerungskomponente, durch die Verwendung einer Übertragungsvorrichtung in einem Luftfahrzeug sowie durch ein Verfahren zum Umschalten von einem ersten Übertragungsmodus in einen zweiten Übertragungsmodus zur Betätigung einer Steuerungskomponente in einem Fahrzeug nach einem der unabhängigen Ansprüche erreicht.

Gemäß der Erfindung ist eine Übertragungsvorrichtung zur Übertragung einer Steuerungskraft in einem Fahrzeug vorgesehen, mit einem ersten Kraftübertragungspunkt, einem zweiten Kraftübertragungspunkt und einer zwischen dem ersten und dem zweiten Kraftübertragungspunkt angeordneten Kopplungseinrichtung. Die Kopplungseinrichtung weist ein erstes Seitenelement, ein zweites Seitenelement und ein Verbindungselement auf. Das erste und das zweite Seitenelement sind mit jeweils einem Ende mit dem ersten Kraftübertragungspunkt drehbeweglich verbunden und mit ihrem jeweils anderen Ende mit dem Verbindungselement an einem ersten bzw. zweiten Verbindungspunkt drehbeweglich verbunden. Der erste und der zweite Verbindungspunkt an dem Verbindungselement sind voneinander beabstandet. Wenigstens das erste Seitenelement weist ein Element zur Längenveränderung des Seitenelements auf. Der zweite Kraftübertragungspunkt ist an dem Verbindungselement vorgesehen und ist wenigstens zwischen einer ersten und einer zweiten Position einstellbar, wobei der zweite Kraftübertragungspunkt in der ersten Position im Bereich des ersten Verbindungspunkts und in der zweiten Position im Bereich des zweiten Verbindungspunkts angeordnet ist.

Gemäß einem weiteren Aspekt der Erfindung ist das Fahrzeug ein Luftfahrzeug, insbesondere ein Flugzeug.

Gemäß einem weiteren Aspekt der Erfindung erfolgt die Kraftübertragung der Kopplungseinrichtung an den zweiten Kraftübertragungspunkt über das Verbindungselement.

Gemäß einem weiteren Aspekt der Erfindung ist die Kopplungseinrichtung derart beweglich, dass die Lage des zweiten Kraftübertragungspunkts einstellbar ist, vorzugsweise variabel.

Gemäß einem weiteren Aspekt der Erfindung umfasst die Einstellbarkeit einen Bereich wenigstens vom ersten bis zum zweiten Verbindungspunkt.

Gemäß einem weiteren Aspekt der Erfindung erfolgt eine Kraftübertragung der Kopplungseinrichtung an den ersten Kraftübertragungspunkt über die Verbindung mit dem ersten und dem zweiten Seitenelement.

Gemäß einem weiteren Aspekt der Erfindung ist ein Führungselement an dem Verbindungselement vorgesehen, und das Verbindungselement ist in Relation zum Führungselement zwischen der ersten Position und der zweiten Position beweglich gehalten, wobei der zweite Kraftübertragungspunkt an dem Führungselement ausgebildet ist.

Gemäß einem weiteren Aspekt der Erfindung ist an den Kraftübertragungspunkten jeweils eine Steuerstange zur Weiterleitung der Steuerungskraft angelenkt.

Gemäß einem weiteren Aspekt der Erfindung sind die Steuerstangen jeweils in einer Linearführung in Stangenrichtung beweglich gehalten.

Gemäß einer beispielhaften Ausführungsform der Erfindung ist das Element zur Längenveränderung ein Aktuator.

Beispielsweise ist der Aktuator ein elektromechanischer Aktuator.

Gemäß einem weiteren Aspekt der Erfindung ist der Aktuator ein fluidmechanischer Aktuator, beispielsweise ein hydraulischer Stellzylinder oder ein Druckluftzylinder.

Gemäß einem weiteren Aspekt der Erfindung ist das Element zur Längenveränderung ein Federelement.

Gemäß einer beispielhaften Ausführungsform der Erfindung sind das jeweils eine Ende des ersten und des zweiten Seitenelements an einem gemeinsamen Haltepunkt an dem ersten Kraftübertragungspunkt gehalten.

Gemäß einem weiteren Aspekt der Erfindung bilden das erste und das zweite Seitenelement mit dem Verbindungselement, bezogen auf die Anschlusspunkte, ein Dreieck.

Gemäß einem weiteren Aspekt der Erfindung sind die Seitenelemente linear oder anders geformt ausgebildet, beispielsweise gekrümmt.

Gemäß einer beispielhaften Ausführungsform der Erfindung bildet das Verbindungselement einen Kreisbogen, wobei der Mittelpunkt des Kreisbogens im Bereich des gemeinsamen Haltepunkts liegt.

Gemäß einer beispielhaften Ausführungsform der Erfindung ist das zweite Seitenelement starr ausgebildet. Die Kopplungseinrichtung ist zwischen einer ersten Stellung und einer zweiten Stellung beweglich, wobei in der ersten Stellung eine Kraftübertragung in einem Bereich erfolgt, der fluchtend zu der Verbindung des ersten Seitenelements mit dem ersten Kraftübertragungspunkt und dem ersten Verbindungspunkt angeordnet ist. In der zweiten Stellung erfolgt eine Kraftübertragung in einem Bereich, der fluchtend zu der Verbindung des zweiten Seitenelements mit dem ersten Kraftübertragungspunkt und dem zweiten Verbindungspunkt angeordnet ist.

Dadurch ist es möglich, eine Kombination einer konventionellen Steuerung und einer Fly-by-wire-Flugsteuerung zur Verfügung zu stellen, wobei die erfindungsgemäße Übertragungsvorrichtung aufgrund der beweglichen Kopplungseinrichtung ein kinematisches Konzept zur Verfügung stellt, mit dem die für die Sicherheit erforderliche Redundanz ermöglicht wird.

Gemäß einer beispielhaften Ausführungsform der Erfindung wird in der ersten Stellung die Steuerungskraft in der Übertragungsvorrichtung durch den Aktuator erzeugt, wobei in der zweiten Stellung die Steuerungskraft durch eine Betätigungsvorrichtung erzeugt wird, die außerhalb der Übertragungsvorrichtung vorgesehen ist. Beispielsweise handelt es sich bei der Betätigungsvorrichtung um einen Steuerknüppel.

Gemäß einer beispielhaften Ausführungsform der Erfindung weist auch das zweite Seitenelement einen Aktuator zur Längenveränderung des Seitenelements auf, wobei wenigstens eine dritte Stellung vorgesehen ist, bei der die Kraftübertragung in einem Bereich erfolgt, der in der Mitte zwischen dem ersten und dem zweiten Verbindungspunkt liegt.

Dadurch wird ein mehrfach redundantes Steuerungssystem zur Verfügung gestellt, bei dem gewährleistet ist, dass es bei Ausfall eines Aktuators nicht zu einem Komplettausfall des Systems kommt, da aufgrund der beweglichen Kopplungseinrichtung ein kinematisches Konzept zur Verfügung gestellt wird, bei dem der andere der beiden Aktuatoren die Kraftübertragung übernimmt. Mit anderen Worten, trotz des Ausfalls des einen Aktuators bleibt die gleiche Steuercharakteristik erhalten wie im ursprünglichen Zustand. Insbesondere bleibt der gleiche Maximalausschlag und auch die Verstellgeschwindigkeit erhalten.

Gemäß einem weiteren Aspekt der Erfindung sind die beiden Aktuatoren jeweils als elektromechanischer Aktuator vorgesehen.

Beispielsweise sind die beiden Aktuatoren als elektrischer Spindelmotor ausgebildet, wobei die Spindelantriebe beispielsweise selbsthemmend ausgebildet sind.

Gemäß einem weiteren Aspekt der Erfindung weisen die Aktuatoren jeweils einen Betätigungsmechanismus ohne Redundanz auf.

Beispielsweise weisen die Aktuatoren jeweils einen einzigen fluidmechanischen Kreislauf auf, wenn die Aktuatoren als fluidmechanisches Stellglied ausgebildet sind.

Beispielsweise sind die beiden Aktuatoren jeweils als ein einfacher fluidmechanischer Stellzylinder ausgebildet, beispielsweise als hydraulischer Stellzylinder.

Gemäß einem weiteren Aspekt der Erfindung bilden die beiden Aktuatoren jeweils ein Teilsystem, wobei bei Ausfall eines Teilsystems durch den möglichen Wechsel zwischen den beiden Teilsystemen die gleiche Steuercharakteristik erhalten bleibt wie im ursprünglichen Zustand.

Gemäß einer beispielhaften Ausführungsform der Erfindung bildet die dritte Position eine Normalstellung, in der beide Aktuatoren zur Erzeugung der Steuerkraft betätigt werden, wobei die erste und die zweite Stellung jeweils eine Redundanzstellung bilden, in der jeweils nur einer der beiden Aktuatoren die Steuerkraft erzeugt.

Gemäß einem weiteren Aspekt der Erfindung ist eine Vorrichtung zur Überwachung der beiden Aktuatoren vorgesehen.

Gemäß einem weiteren Aspekt der Erfindung ist wenigstens ein Stellelement vorgesehen zur Bewegung der Kopplungseinrichtung.

Gemäß einem weiteren Aspekt der Erfindung aktiviert die Überwachungsvorrichtung das wenigstens eine Stellelement bei Ausfall oder Fehlfunktion eines Aktuators.

Die Erfindung umfasst auch ein Luftfahrzeug. Gemäß einer beispielhaften Ausführungsform der Erfindung ist ein Luftfahrzeug mit einem Steuerungssystem zur Betätigung einer Steuerungskomponente vorgesehen, wobei das Steuerungssystem eine Eingabevorrichtung zur Eingabe des Steuerbefehls, eine Steuerkrafterzeugungsvorrichtung, ein Übertragungssystem zur Übertragung der Steuerkraft und wenigstens eine flugtechnische Steuerungskomponente aufweist. Das Übertragungssystem weist wenigstens eine Übertragungsvorrichtung nach einer der vorhergehenden Ausführungsbeispiele und Aspekte der Erfindung auf.

Gemäß einem weiteren Aspekt der Erfindung ist die Steuerungskomponente für die primäre Flugsteuerung vorgesehen.

Gemäß einem weiteren Aspekt der Erfindung ist die Steuerungskomponente für die sekundäre Flugsteuerung vorgesehen.

Beispielsweise kann die Steuerungskomponente für die primäre und die sekundäre Flugsteuerung verwendet werden.

Beispielsweise weist die Steuerungskomponente der primären Flugsteuerung insbesondere ein Höhenruder, ein Seitenruder oder ein Querruder auf. Die Steuerungskomponente der sekundären Flugsteuerung weist beispielsweise insbesondere einen Spoiler oder eine Landeklappe auf.

Die Erfindung umfasst ebenfalls die Verwendung einer Übertragungsvorrichtung nach einer der vorhergehend beschriebenen Ausführungsbeispiele und Aspekte der Erfindung in einem Luftfahrzeug.

Gemäß einer beispielhaften Ausführungsform der Erfindung umfasst die Verwendung auch die Verwendung in einem Luftfahrzeug, das eine wenigstens teilweise Fly-by-wire-Flugsteuerung aufweist.

Gemäß einem weiteren Aspekt der Erfindung wird die Übertragungsvorrichtung statt in einem Luftfahrzeug in einem Fahrzeug verwendet, beispielsweise einem Straßen- oder Wasserfahrzeug, wobei das Fahrzeug eine wenigstens teilweise Drive-by-wire-Steuerung aufweist.

Die Erfindung bezieht sich auf die Betätigung einer Steuerungskomponente. Gemäß einer beispielhaften Ausführungsform der Erfindung ist ein Verfahren zum Umschalten von einem ersten Übertragungsmodus in einen zweiten Übertragungsmodus zur Betätigung der Steuerungskomponente in einem Fahrzeug vorgesehen, wobei zur Übertragung einer Steuerungskraft eine Übertragungsvorrichtung nach einer der vorhergehend beschriebenen Ausführungsformen bzw. - aspekte vorgesehen ist, wobei das Verfahren die folgenden Schritte umfasst:
a) Anordnen des zweiten Kraftübertragungspunkts in eine Normalstellung, in der eine von dem wenigstens einen Element zur Längenveränderung bewirkte Längenveränderung auf den zweiten Kraftübertragungspunkt übertragbar ist;
b) Erzeugen einer Steuerungskraft durch eine Steuerkrafterzeugungsvorrichtung und Übertragen der Steuerungskraft in einem ersten Modus, bei dem der zweite Kraftübertragungspunkt in der Normalstellung angeordnet ist, und bei dem die Steuerungskraft durch wenigstens ein Element zur Längenveränderung bzw. einen Aktuator in dem ersten Seitenelement erzeugt wird;
c) Verlagern des Verbindungselements derart, dass der zweite Kraftübertragungspunkt in einer Redundanzstellung angeordnet ist, in der bei Fehlfunktion eines Elements zur Längenänderung bzw. eines Aktuators in einem der Seitenelemente die Steuerungskraft durch das andere der beiden Seitenelemente auf den zweiten Kraftübertragungspunkt übertragbar ist; und
d) Erzeugen einer Steuerungskraft durch eine Steuerkrafterzeugungsvorrichtung und Übertragen der Steuerungskraft in einen zweiten Modus, bei dem der zweite Kraftübertragungspunkt in der Redundanzstellung angeordnet ist.

Gemäß einem weiteren Aspekt der Erfindung werden die Schritte in einem Luftfahrzeug, insbesondere einem Flugzeug ausgeführt.

Gemäß einer beispielhaften Ausführungsform der Erfindung ist das zweite Seitenelement starr ausgebildet. In dem ersten Modus in Schritt b) wird die Steuerungskraft durch den Aktuator in dem ersten Seitenelement erzeugt, und in dem zweiten Modus in Schritt d) wird die Steuerungskraft durch eine Betätigungsvorrichtung erzeugt, die außerhalb der Übertragungsvorrichtung vorgesehen ist.

Gemäß einem weiteren Aspekt der Erfindung stützt sich der Aktuator auf der einen Seite ab, z.B. außerhalb der Übertragungsvorrichtung, um die Steuerkraft auf der anderen Seite des Aktuators aufbringen bzw. abgeben zu können.

Gemäß einem weiteren Aspekt der Erfindung ist der zweite Kraftübertragungspunkt in der Normalstellung in der ersten Position angeordnet. Außerdem ist der zweite Kraftübertragungspunkt in der Redundanzstellung in der zweiten Position angeordnet.

Gemäß einer beispielhaften Ausführungsform der Erfindung weist auch das zweite Seitenelement einen Aktuator zur Längenveränderung des Seitenelements auf, d.h., ein erster Aktuator ist in dem ersten Seitenelement, und ein zweiter Aktuator ist in dem zweiten Seitenelement vorgesehen. Der Kraftübertragungspunkt ist in wenigstens einer dritten Position einstellbar, bei der die Kraftübertragung in einem Bereich erfolgt, der in der Mitte zwischen dem ersten und dem zweiten Verbindungspunkt liegt. In dem ersten Modus in Schritt b) wird die Steuerungskraft durch beide Aktuatoren erzeugt, und in dem zweiten Modus in Schritt d) wird die Steuerungskraft durch nur einen der beiden Aktuatoren erzeugt.

Gemäß einem weiteren Aspekt der Erfindung ist der zweite Kraftübertragungspunkt in der Normalstellung in der dritten Position angeordnet. In der Redundanzstellung ist der zweite Kraftübertragungspunkt in der ersten oder zweiten Position angeordnet.

Gemäß einem weiteren Aspekt der Erfindung wirken die zwei Aktuatoren in Schritt b) parallel.

Gemäß einer beispielhaften Ausführungsform der Erfindung erfolgt während der Übertragung der Steuerungskraft in Schritt b) eine Überwachung der beiden Aktuatoren, wobei bei einer Fehlfunktion eines der beiden Aktuatoren ein Stellelement aktiviert wird, mit welchem das Verlagern in Schritt c) ausgeführt wird.

Gemäß einem weiteren Aspekt der Erfindung erfolgt das Verlagern in Abhängigkeit der erfassten Fehlfunktion.

Gemäß einem weiteren Aspekt der Erfindung wird das Verbindungselement bei einer reduzierten Steuerkraft eines der beiden Aktuatoren derart verlagert, dass die geometrischen (Hebel-) Verhältnisse das Kraftverhältnis zwischen dem intakten und dem defekten, bzw. nicht einwandfrei funktionierenden Aktuator abbilden bzw. diesem Verhältnis entsprechen.

Es sei darauf hingewiesen, dass die Merkmale der Ausführungsbeispiele und Aspekte der Vorrichtungen auch für Ausführungsformen des Verfahrens sowie Verwendung der Vorrichtungen gelten und umgekehrt. Außerdem können auch diejenigen Merkmale frei miteinander kombiniert werden, bei denen dies nicht explizit erwähnt ist.

Nachfolgend wird anhand der beigefügten Zeichnungen näher auf ein Ausführungsbeispiel der Erfindung eingegangen. Es zeigen:
- **Fig. 1**: ein Luftfahrzeug mit einem Steuerungssystem zur Betätigung einer Steuerungskomponente gemäß der Erfindung in einer schematischen Seitenansicht;
- **Fig. 2**: eine Übertragungsvorrichtung zur Übertragung einer Steuerungskraft in einer schematischen Funktionsskizze;
- **Fig. 3**: ein weiteres Beispiel einer Übertragungsvorrichtung gemäß der Erfindung;
- **Fig. 4**: eine weitere Ausführungsform einer Übertragungsvorrichtung gemäß der Erfindung;
- **Fig. 5**: eine weitere Ausführungsform einer Übertragungsvorrichtung gemäß der Erfindung;
- **Fig. 6**: eine weitere Ausführungsform der Übertragungsvorrichtung nach Fig. 5;
- **Fig. 7**: die Übertragungsvorrichtung nach Fig. 5 in einem weiteren Betriebsmodus;
- **Fig. 8**: eine weitere Ausführungsform der Übertragungsvorrichtung nach Fig. 5;
- **Fig. 9**: Verfahrensschritte eines Verfahrens gemäß der Erfindung;
- **Fig. 10**: eine weitere Ausführungsform des Verfahrens nach Fig. 9;
- **Fig. 11**: eine weitere Ausführungsform des Verfahrens nach Fig. 9;
- **Fig. 12**: eine weitere Ausführungsform einer Übertragungsvorrichtung in einer schematischen Konstruktionszeichnung;
- **Fig. 13**: die Übertragungsvorrichtung nach Fig. 12 während eines Übergangsstadiums;
- **Fig. 14**: die Übertragungsvorrichtung nach Fig. 12 in einem weiteren Betriebsmodus;
- **Fig. 15**: eine Schnittzeichnung der Übertragungsvorrichtung nach Fig. 14 entlang der Schnittlinien A-A;
- **Fig. 16**: eine weitere Ausführungsform einer Übertragungsvorrichtung in einer schematischen Schnittdarstellung;
- **Fig. 17**: eine weitere Ausführungsform einer Übertragungsvorrichtung; und

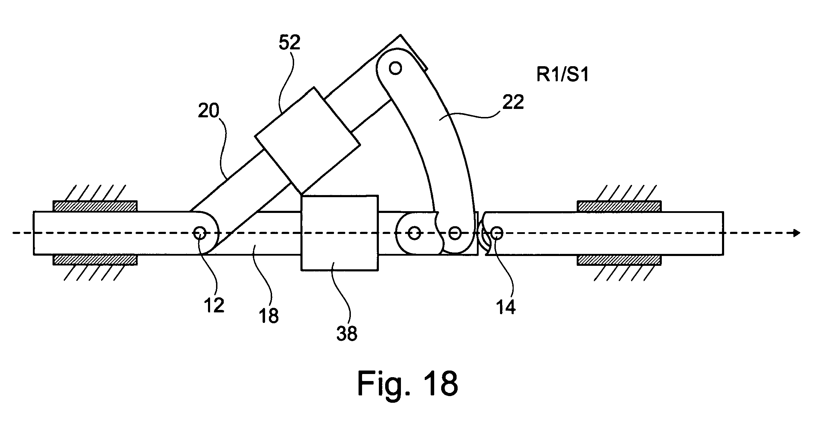

- **Fig. 18**: die Übertragungsvorrichtung nach Fig. 17 in einem weiteren Betriebsmodus.

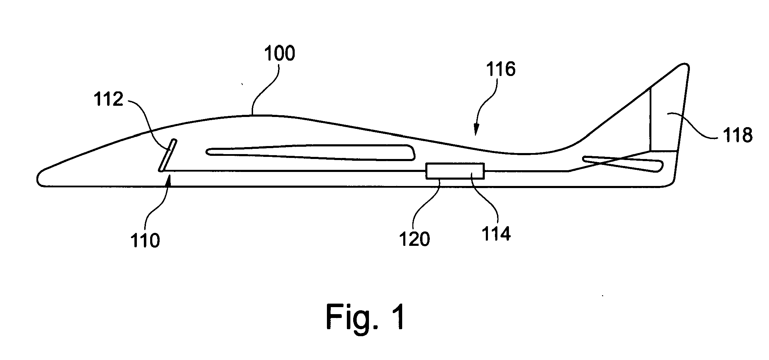

In Fig. 1 ist ein Luftfahrzeug 100 in einer schematischen Seitendarstellung gezeigt. Das Luftfahrzeug 100 weist ein Steuerungssystem 110 zur Betätigung einer Steuerungskomponente auf. Das Steuerungssystem weist eine Eingabevorrichtung 112 zur Eingabe des Steuerbefehls, eine Steuerkrafterzeugungsvorrichtung 114, ein Übertragungssystem 116 zur Übertragung der Steuerkraft und wenigstens eine flugtechnische Steuerungskomponente 118 auf. Das Übertragungssystem 116 weist wenigstens eine Übertragungsvorrichtung 120 auf, die im Folgenden in verschiedenen Ausführungsformen beschrieben wird.

In Fig. 1 ist die flugtechnische Steuerungskomponente 118 als Seitenleitwerk dargestellt, d.h., die Steuerungskomponente ist für die primäre Flugsteuerung vorgesehen. Gemäß einem weiteren Aspekt der Erfindung, der nicht näher gezeigt ist, kann die Steuerungskomponente auch für die sekundäre Flugsteuerung vorgesehen sein. Mit anderen Worten, die Steuerungskomponente kann beispielsweise ein Höhenruder oder ein Querruder sowie auch ein Spoiler oder eine Landeklappe sein.

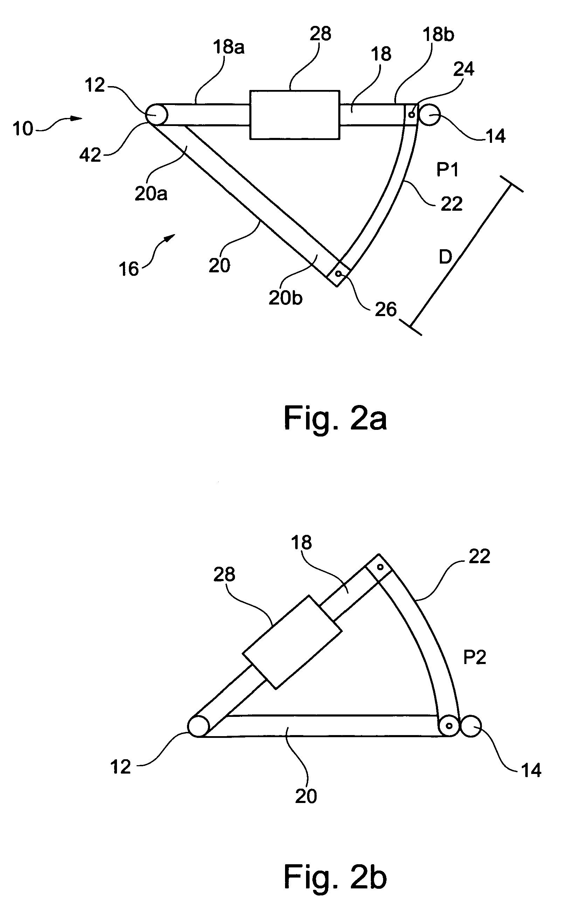

In Fig. 2 ist eine Übertragungsvorrichtung 10 zur Übertragung einer Steuerungskraft in einem Fahrzeug schematisch gezeigt. Die Übertragungsvorrichtung ist in Fig. 2a in einem ersten Übertragungsmodus und in Fig. 2b in einem zweiten Übertragungsmodus gezeigt.

Die Übertragungsvorrichtung 10 weist einen ersten Kraftübertragungspunkt 12, einen zweiten Kraftübertragungspunkt 14 und eine zwischen dem ersten und dem zweiten Kraftübertragungspunkt angeordnete Kopplungseinrichtung 16 auf.

Die Kopplungseinrichtung weist ein erstes Seitenelement 18, ein zweites Seitenelement 20 und ein Verbindungselement 22 auf.

Das erste Seitenelement 18 ist mit einem Ende 18a mit dem ersten Kraftübertragungspunkt 12 verbunden und mit dem anderen Ende, gekennzeichnet durch Bezugszeichen 18b, mit dem Verbindungselement 22 an einem ersten Verbindungspunkt 24 verbunden.

Das zweite Seitenelement 20 ist mit einem Ende 20a mit dem ersten Kraftübertragungspunkt 12 verbunden und mit dem anderen Ende, gekennzeichnet durch Bezugszeichen 20b, mit dem Verbindungselement 22 an einem zweiten Verbindungspunkt 26 verbunden.

Wie in Fig. 2a dargestellt, sind der erste und der zweite Verbindungspunkt 24, 26 an dem Verbindungselement 22 voneinander beabstandet; der Abstand des ersten und des zweiten Verbindungspunktes 24, 26 ist mit dem Bezugszeichen D angedeutet.

Gemäß einer weiteren Ausführungsform, die jedoch nicht näher dargestellt ist, können die beiden Seitenelemente 18, 20 mit dem ersten Kraftübertragungspunkt 12 auch indirekt verbunden sein mit Hilfe eines Anschlusselements, das jedoch nicht dargestellt ist.

Unter Bezugnahme auf Fig. 2 weist wenigstens das erste Seitenelement 18 ein Element 28 zur Längenveränderung des Seitenelements auf.

Der zweite Kraftübertragungspunkt 14 ist an dem Verbindungselement 22 vorgesehen und wenigstens zwischen einer ersten Position P1, die in Fig. 2a dargestellt ist, und einer zweiten Position P2 einstellbar, die in Fig. 2b gezeigt ist. Dabei ist der zweite Kraftübertragungspunkt 14 in der ersten Position P1 im Bereich des ersten Verbindungspunkts 24 und in der zweiten Position P2 im Bereich des zweiten Verbindungspunkts 26 angeordnet.

Gemäß einem weiteren Aspekt der Erfindung, der in Fig. 2a und 2b zu erkennen ist, erfolgt die Kraftübertragung der Kopplungseinrichtung 16 an den zweiten Kraftübertragungspunkt 14 über das Verbindungselement 22.

Gemäß einem weiteren Aspekt der Erfindung, der in Fig. 2 jedoch nicht näher gezeigt ist, ist die Kopplungseinrichtung 16 derart beweglich, dass die Lage des zweiten Kraftübertragungspunkts eingestellt werden kann.

Die Kraftübertragung der Kopplungseinrichtung 16 an den ersten Kraftübertragungspunkt 12 erfolgt über die Verbindung mit dem ersten und dem zweiten Seitenelement 18, 20.

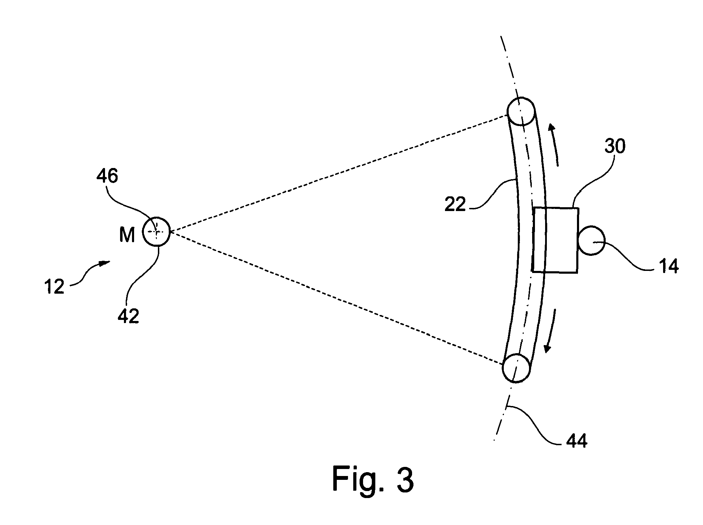

Gemäß einem weiteren Aspekt der Erfindung ist an dem Verbindungselement 22 ein Führungselement 30 vorgesehen, und das Verbindungselement 22 ist in Relation zum Führungselement 30 zwischen der ersten Position P1 und der zweiten Position P2 beweglich gehalten. Wie in Fig. 3 zu sehen ist, ist der zweite Kraftübertragungspunkt 14 an dem Führungselement 30 ausgebildet. Mit anderen Worten, die Kraftübertragung erfolgt von dem Verbindungselement 22 über das Führungselement 30 an den zweiten Kraftübertragungspunkt 14.

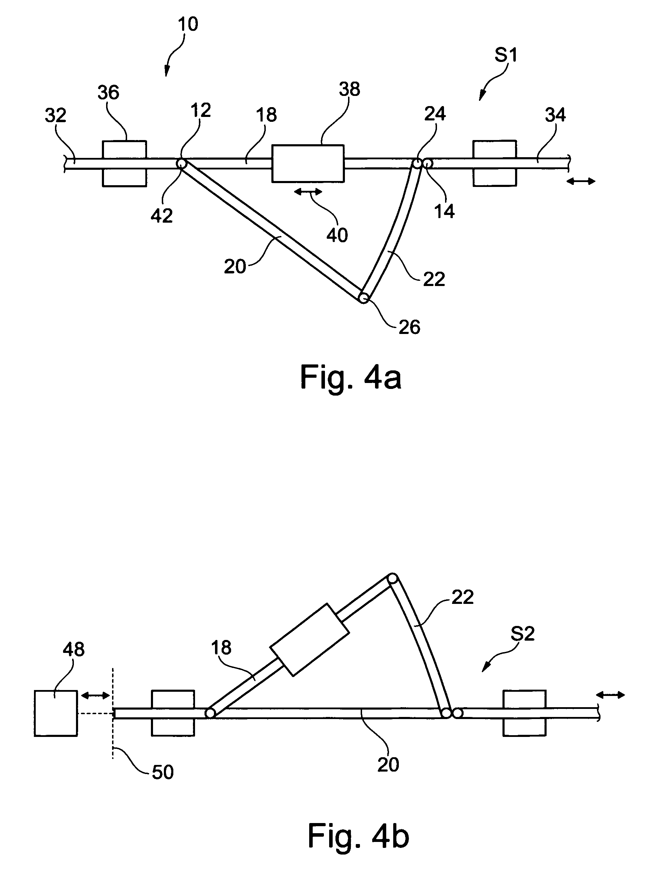

Gemäß einem weiteren Aspekt der Erfindung, der in Figur 4 gezeigt ist, ist an den beiden Kraftübertragungspunkten 12, 14 jeweils eine Steuerstange 32, 34 zur Weiterleitung der Steuerungskraft angelenkt.

Gemäß einem weiteren Aspekt der Erfindung, der ebenfalls in Fig. 4 gezeigt ist, jedoch nicht zwingend erforderlich ist, sind die Steuerstangen 32, 34 in einer Linearführung 36 in Stangenrichtung beweglich gehalten.

Gemäß einem weiteren Aspekt der Erfindung ist das Element zur Längenveränderung 28 ein Aktuator 38, was in Fig. 4a schematisch angedeutet ist durch einen Doppelpfeil 40.

Der Aktuator 38 ist beispielsweise ein elektromechanischer oder ein fluidmechanischer Aktuator.

Wie bereits erwähnt, kann das Element zur Längenveränderung 28 auch ein Federelement sein, was jedoch nicht näher gezeigt ist.

Gemäß einem weiteren Aspekt der Erfindung, wie in Fig. 2 und 4 angedeutet, sind das jeweils eine Ende des ersten und des zweiten Seitenelements, d.h. die beiden Enden 18a, 20a an einem gemeinsamen Haltepunkt an dem ersten Kraftübertragungspunkt 12 gehalten, wobei der gemeinsame Haltepunkt in den genannten Figuren mit einem Kreis 42 schematisch angedeutet ist.

Generell gilt, dass gemäß der Erfindung die Verbindung des ersten Seitenelements 18 und des zweiten Seitenelements 20 im Bereich des ersten Kraftübertragungspunkts 12 drehbeweglich ausgebildet ist.

Gemäß einem weiteren Aspekt der Erfindung bilden das erste und das zweite Seitenelement 18, 20 zusammen mit dem Verbindungselement 22, bezogen auf die Anschlusspunkte der einzelnen Elemente bzw. deren Verbindungspunkte miteinander, ein Dreieck. Die Verbindungspunkte sind dabei drehbeweglich ausgebildet.

Gemäß einem Aspekt der Erfindung sind die Seitenelemente linear ausgebildet, können jedoch auch eine davon abweichende Form haben.

Gemäß einem weiteren Aspekt der Erfindung, der in Fig. 3 gezeigt ist, jedoch auch unabhängig von dem Führungselement und den anderen in Fig. 3 beschriebenen Merkmalen vorgesehen sein kann, bildet das Verbindungselement 22 einen Kreisbogen 44, wobei der Mittelpunkt des Kreisbogens, in Fig. 3 schematisch gezeigt und mit der Bezugsziffer 46 bezeichnet ist, im Bereich des gemeinsamen Haltepunkts 42 angeordnet ist.

Gemäß einem weiteren Aspekt der Erfindung, der auch in Fig. 4a und 4b dargestellt ist, ist das zweite Seitenelement 20 starr ausgebildet. Die Kopplungseinrichtung 16 ist zwischen einer ersten Stellung S1, die in Fig. 4a gezeigt ist, und einer zweiten Stellung S2, die in Fig. 4b dargestellt ist, beweglich. In der ersten Stellung S1 erfolgt eine Kraftübertragung am zweiten Kraftübertragungspunkt 14 in einem Bereich, der fluchtend zu der Verbindung des ersten Seitenelements 18 mit dem ersten Kraftübertragungspunkt 12 und dem ersten Verbindungspunkt 24 angeordnet ist.

Wie in Fig. 4b zu sehen ist, erfolgt in der zweiten Stellung S2 eine Kraftübertragung an dem zweiten Kraftübertragungspunkt 14 in einem Bereich, der fluchtend zu der Verbindung des zweiten Seitenelements 20 mit dem ersten Kraftübertragungspunkt 14 und dem zweiten Verbindungspunkt 26 angeordnet ist.

In der ersten Stellung S1 wird die Steuerungskraft in der Übertragungsvorrichtung 10 durch den Aktuator 38 erzeugt. In der zweiten Stellung S2 wird die Steuerungskraft durch eine Betätigungsvorrichtung 48 erzeugt, die außerhalb der Übertragungsvorrichtung vorgesehen ist, was mit einer gestrichelten Linie 50 angedeutet ist. Beispielsweise handelt es sich bei der Betätigungsvorrichtung 48 um einen Steuerknüppel.

Die oberhalb beschriebenen Aspekte mit dem starren zweiten Seitenelement 20 können auch in Kombination mit Merkmalen verwendet werden, die anhand anderer Figuren beschrieben sind.

Die Ausbildung der Übertragungsvorrichtung 10 mit einem starren Seitenelement und einem Aktuator in dem anderen Seitenelement erlaubt beispielsweise die Ausstattung eines bereits zugelassenen Luftfahrzeugs mit einer konventionellen Steuerung, d.h. einer mechanischen Kopplung zwischen Betätigungselement und dem anzusteuernden Element, mit einer zusätzlichen Fly-by-wire-Flugsteuerung, bei der für die Betätigung des Steuerelements zunächst ein elektronischer bzw. elektrischer Steuerbefehl vorliegt, der über eine elektrische Leitung einem Aktuator zugeführt wird, der dann die Betätigungskraft erzeugt.

Diese Kombination eignet sich beispielsweise besonders für die Erprobung neuer Fly-by-wire-Flugzeugkomponenten, die sich aufgrund der durch die Erfindung zur Verfügung gestellten Redundanz im Flugbetrieb testen lassen. Kommt es während der Fly-by-wire-Flugsteuerung zu einem Ausfall der Steuerung, beispielsweise durch einen Softwarefehler, oder auch durch einen Ausfall des Aktuators, beispielsweise eines elektromechanischen Aktuators, kann durch die Verlagerung der Kopplungseinrichtung von der ersten in die zweite Stellung die Steuerung mittels konventioneller Komponenten erfolgen, wie z.B. mittels eines Steuerknüppels oder anderer durch den Piloten bedienbare Betätigungselemente.

Mit anderen Worten, gemäß der Erfindung wird ein kinematisches Konzept zur Verfügung gestellt, das bei Ausfall des Fly-by-wire-Flugsteuerungssystems eine Redundanz gewährleistet, die die erforderliche Sicherheit auch bei einem Ausfall der Fly-by-wire-Flugsteuerung ermöglicht.

Gemäß einem weiteren Aspekt der Erfindung sind die Aktuatoren jeweils einzeln auf diese Lastfälle auszulegen, d.h., während des normalen Flugbetriebs unter Verwendung beider Aktuatoren werden beide auch nur sozusagen halb belastet.

Die erfindungsgemäße Übertragungsvorrichtung eignet sich insbesondere für elektromechanische Aktuatoren, bei denen es bisher einen sehr großen Aufwand bedeutet hat, eine Redundanz zur Verfügung zu stellen. Die Verwendung von elektromechanischen Aktuatoren hat den Vorteil, dass das Gesamtsystem unabhängig von einem hydraulischen System ausgebildet werden kann, was insbesondere bei modernen Fly-by-wire-Flugzeugen bzw. Drive-by-wire-Fahrzeugen von Vorteil ist, da diese zunehmend elektrisch betrieben werden.

Die erfindungsgemäße Übertragungsvorrichtung eignet sich jedoch auch insbesondere für hydraulische Steuerungssysteme, da hier die bisher üblichen komplizierten Stellelemente mit doppeltem Hydraulikkreislauf durch einfache Stellzylinder ersetzt werden können, was einen Kostenvorteil und auch Gewichtsvorteil bedeutet.

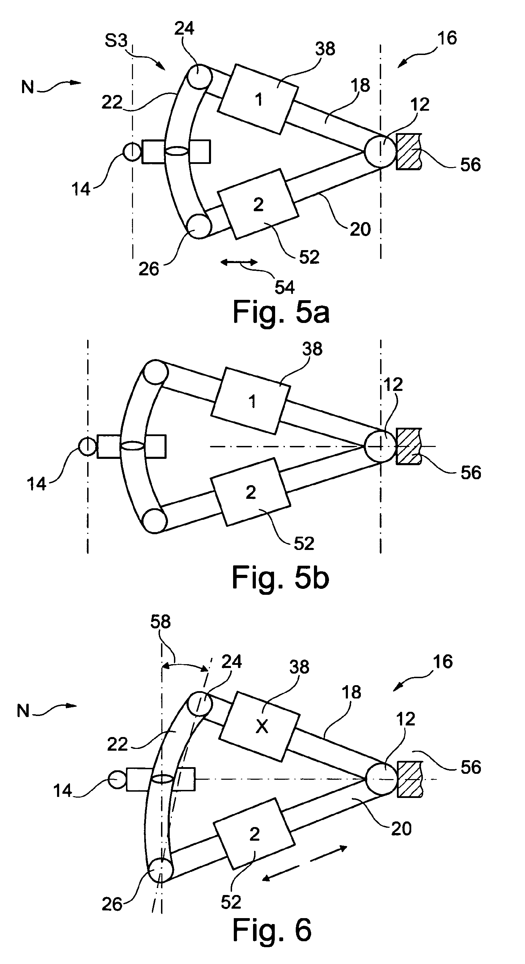

Gemäß einem weiteren Aspekt der Erfindung, der in den Figuren 5 bis 8 anhand unterschiedlicher Ausführungsbeispiele beschrieben wird, weist auch das zweite Seitenelement 20 einen Aktuator 52 zur Längenveränderung des Seitenelements 20 auf. Wenigstens eine dritte Stellung S3 ist vorgesehen, bei der die Kraftübertragung an dem zweiten Kraftübertragungspunkt 14 in einem Bereich erfolgt, der in der Mitte zwischen dem ersten Verbindungspunkt 24 und dem zweiten Verbindungspunkt 26 liegt.

Gemäß einem weiteren Aspekt der Erfindung bildet die dritte Stellung die Normalstellung, in der beide Aktuatoren 38, 52 zur Erzeugung der Steuerkraft betätigt werden, wobei die erste und die zweite Stellung S1, S2 jeweils eine Redundanzstellung bilden, die in Fig. 6 dargestellt ist und mit den Bezugszeichen R1 bzw. R2 gekennzeichnet ist, in der jeweils nur einer der beiden Aktuatoren die Steuerkraft erzeugt.

Zunächst soll jedoch die Normalstellung, in Fig. 5 auch mit N bezeichnet, beschrieben werden. In Fig. 5a sind die beiden Aktuatoren 38, 52 schematisch in einem eingefahrenen Zustand gezeigt, d.h. bei einer minimalen Längenausbildung der Seitenelemente 18, 20. Durch Betätigung der Aktuatoren lassen sich die Seitenelemente 18, 20 in ihrer Länge verändern, so dass der zweite Kraftübertragungspunkt 14 nach links verschoben wird, was durch einen Doppelpfeil 54 angedeutet ist. In Fig. 5b ist schematisch der Zustand gezeigt, der bei maximal ausgefahrenen Aktuatoren 38, 52 erreichbar ist.

Wie schematisch angedeutet, wirken die beiden Aktuatoren gleichermaßen. Im Sinne der funktionalen Anordnung wirken die beiden Aktuatoren z.B. parallel, auch wenn sie nicht geometrisch parallel ausgebildet sein müssen. Aufgrund der Längenänderung der beiden Seitenelemente 18, 20 kommt es zu einer Veränderung der Dreiecksstruktur, d.h. zu einer Längendehnung. Mit anderen Worten, die Übertragungsvorrichtung 10 erzeugt eine Betätigungskraft zur Steuerung einer Steuerungskomponente. Wenn, wie in Fig. 5a und 5b gezeigt, der erste Kraftübertragungspunkt 12 unbeweglich gehalten ist, was durch eine Schraffur 56 angedeutet ist, kommt es zwangsläufig zu einer Verlagerung des zweiten Kraftübertragungspunkts 14.

Gemäß einem weiteren Aspekt der Erfindung, der in Fig. 6 angedeutet ist, kann es bei Ausfall eines der beiden Aktuatoren 38, 52 in der Normalposition N, bzw. S3 nicht mehr zu einer ordnungsgemäßen Kraftübertragung kommen, da nun die einseitige Längenveränderung, beispielsweise des zweiten Seitenelements 20, zu einer Verschiebung der Dreiecksstruktur führt.

Die Verbindungspunkte sind generell drehbeweglich auszubilden, zumindest in den zu erwartenden Winkeländerungen aufgrund der erforderlichen Streckung bzw. Dehnung und Stauchung der Dreiecksstruktur, damit es zu einer Verlagerung der Kraftübertragungspunkte, d.h. zu einer Abstandsänderung zwischen dem ersten und dem zweiten Kraftübertragungspunkt überhaupt kommen kann.

Wie in Fig. 6 angedeutet, kommt es bei Ausfall eines Aktuators zu einer Verlagerung des Verbindungselements 22 in Bezug auf dessen Ausrichtung, bezogen auf die Verbindungslinie zwischen dem ersten und dem zweiten Kraftübertragungspunkt, bzw. zu einer Senkrechten auf dieser Verbindungslinie. Dies ist in Fig. 6 durch einen Winkel 58 angedeutet. Der Winkel 58 stellt folglich einen Fehlerindikator dar, mit dem die Fehlfunktion eines der beiden Aktuatoren erfasst werden kann.

Mittels Sensoren lässt sich außerdem ermitteln, welcher der beiden Aktuatoren defekt ist bzw. eine Fehlfunktion aufweist.

Beispielsweise führt ein defekter Spindelmotor dazu, dass es auf dieser Seite keine Längenänderung mehr gibt. Dementsprechend kommt es auch an dem jeweiligen Verbindungspunkt mit dem Verbindungselement 22 nicht mehr zu einer Ortsveränderung. Dahingegen führt eine Betätigung des funktionierenden Aktuators nur zu einem verringerten Versatz des zweiten Kraftübertragungspunkts, und zu einem Versatz des Verbindungspunkts des jeweiligen Seitenelements mit dem Verbindungselement. Neben der Winkeländerung des Verbindungselements 22 ist also die unterschiedliche Ortsverlagerung der beiden Verbindungspunkte an dem Verbindungselement ein Indikator für die Fehlfunktion eines Aktuators.

Bei der Verwendung eines Aktuators, der bei Ausfall oder Defekt keine Wirkung mehr hat, also auch keine selbsthemmende oder bremsende Wirkung, z.B. bei einem Hydraulikzylinder, käme es bei Ausfall des einen Aktuators bei Betätigung des funktionierenden Aktuators zu keinem Versatz der Kraftübertragungspunkte zueinander, sondern nur zu einem Versatz des Verbindungspunkts des jeweiligen Seitenelements mit dem Verbindungselement, in dem der funktionierende Aktuator angeordnet ist in der einen Richtung und einem Versatz des anderen Verbindungspunkts in der anderen Richtung. Lediglich in seinem Anschlagsstellungen, d.h. bei minimaler bzw. maximaler Auslenkung, würde der defekte Aktuator auch dazu führen, dass sich die Kraftübertragungspunkte zueinander bewegen.

In den Figuren 5f. sind die beiden Aktuatoren der Einfachheit halber zusätzlich mit einer 1 bzw. einer 2 gekennzeichnet. Wie in Fig. 6 zu sehen ist, ist der Ausfall eines Aktuators, in Fig. 6 der Aktuator 38 am ersten Seitenelement 18, mit einem X statt der Ziffer gekennzeichnet.

Kommt es nun zu einem Ausfall oder einer Fehlfunktion eines Aktuators, kann die Kopplungseinrichtung 16 derart bewegt werden, dass das Verbindungselement von der dritten Stellung S3, d.h. der Normalstellung N, in die erste oder zweite Stellung S1, bzw. S2 verlagert wird. Dies ist in Fig. 6 beispielhaft anhand der zweiten Stellung S2 dargestellt.

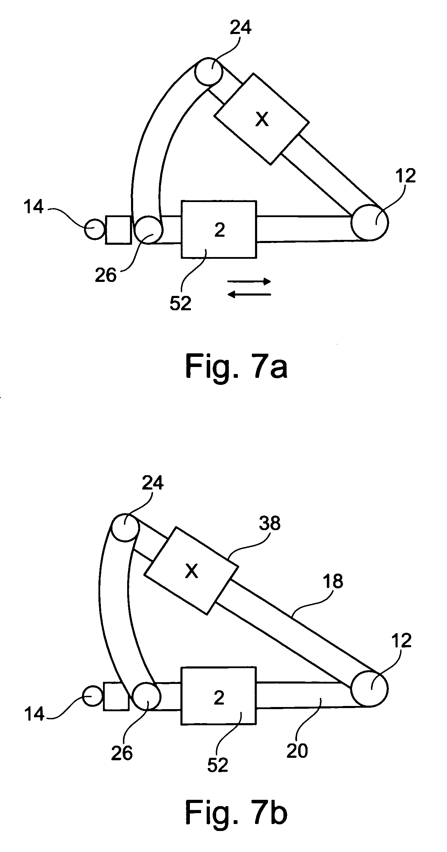

Wie in Fig. 7a zu erkennen ist, befindet sich nun das zweite Seitenelement 20 mit dem Aktuator 52 zwischen dem ersten Kraftübertragungspunkt 12 und dem zweiten Kraftübertragungspunkt 14. Mit anderen Worten, der zweite Aktuator ist nun in Reihe geschaltet anstelle der parallel geschalteten Aktuatoren aus Fig. 5 bzw. 6. In Fig. 7a ist der Aktuator 52 in der ausgefahrenen Stellung gezeigt, d.h., das zweite Seitenelement 20 weist die Maximallänge auf. Kommt es nun zu einer Betätigung des Aktuators 52 und einer entsprechenden Längenverkürzung des zweiten Seitenelements 20, was durch Doppelpfeile 60 angedeutet ist, ändert sich auch der Abstand zwischen dem ersten Kraftübertragungspunkt 12 und dem zweiten Kraftübertragungspunkt 14. Wie in Fig. 7b zu sehen ist, kommt es aufgrund der Fehlfunktion bzw. des Ausfalls des Aktuators 38 im Bereich des ersten Seitenelements 18 zu keiner Längenänderung. Folglich bleibt das erste Seitenelement 18 mehr oder weniger in seiner Lage unverändert, und lediglich das Verbindungselement 22 nimmt eine andere Winkellage im Raum ein, da der erste Verbindungspunkt 24 mehr oder weniger unveränderlich ist und der zweite Verbindungspunkt 26 in Fig. 7b nach rechts wandert.

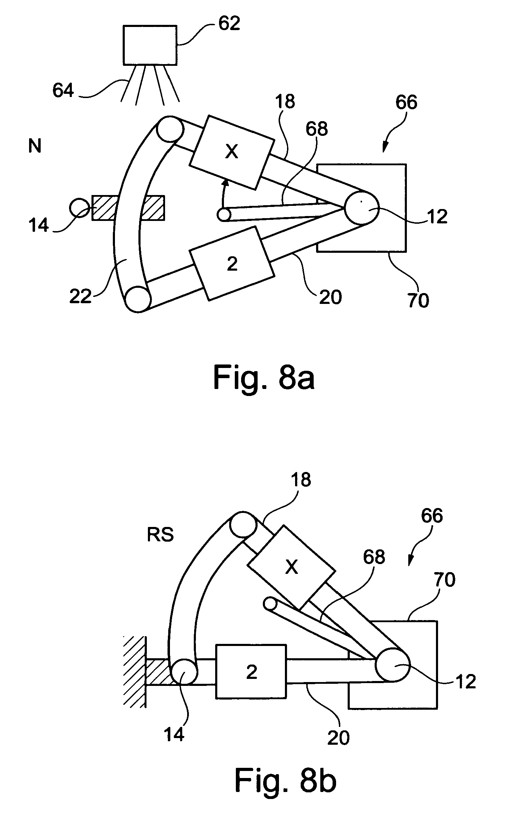

Gemäß einem weiteren Aspekt der Erfindung ist eine Vorrichtung 62 zur Überwachung der beiden Aktuatoren vorgesehen. Dies kann beispielsweise über die Ermittlung des in Fig. 6 gezeigten Fehlerindikators, d.h. des Winkels 58, und der Erfassung der Ortsveränderung des ersten bzw. des zweiten Verbindungspunkts 26 erfolgen, was in Fig. 8a durch eine schematische Schraffur 64 angedeutet ist, die symbolhaft die Überwachung zeigen soll. Selbstverständlich ist es auch möglich, die Überwachung der beiden Aktuatoren durch in den Aktuator integrierte Sensoren auszuführen, wie sie im Bereich der Fly-by-wire-Steuerung in der Regel für die Steuerung und die Rückmeldung des ausgeführten Steuerungsbefehls verwendet werden.

Wie in Fig. 8 gezeigt, ist außerdem ein Stellelement 66 vorgesehen, mittels dessen die Kopplungseinrichtung 16 bewegt werden kann. Dies ist in Fig. 8 durch einen schematischen Hebel 68 gezeigt, der durch Antrieb, beispielsweise eines Motors 70, das Dreieck, bestehend aus dem ersten Seitenelement 18, dem Verbindungselement 22 und dem zweiten Seitenelement 20, um den ersten Kraftübertragungspunkt 12 derart verschwenken kann, dass es möglich ist, den ersten bzw. zweiten Aktuator in Reihe mit dem ersten und dem zweiten Kraftübertragungspunkt anzuordnen. In Fig. 8b ist die zweite Stellung S2 gezeigt, d.h. die zweite Redundanzstellung R2, welche die Kopplungseinrichtung 16 eingenommen hat, nachdem das Stellelement 66 die Bewegung ausgeführt hat.

Beispielsweise wird das Stellelement 66 durch die Überwachungsvorrichtung 62 bei Ausfall oder Fehlfunktion eines Aktuators aktiviert.

Neben der in Fig. 7 und 8 gezeigten zweiten Stellung kann die Kopplungseinrichtung 16 bei Ausfall des zweiten Aktuators, d.h. des Aktuators 52 im Bereich des zweiten Seitenelements 20 auch in die andere Stellung, d.h. in die erste Redundanzstellung R1 bzw. S1 bewegt werden, damit in dieser Stellung der erste Aktuator, d.h. der Aktuator 38 im Bereich des ersten Seitenelements 18 die Betätigung übernehmen kann, wenn es zu einem umgekehrten Ausfall der Aktuatoren kommt.

Gemäß einem weiteren Aspekt der Erfindung ist es darüber hinaus auch möglich, die Kopplungseinrichtung 16 von der Normalstellung N bzw. S3 in eine Zwischenposition derart zu verfahren, dass es zu einer Ausbildung von unterschiedlichen Hebeln kommt, wobei sich der Begriff Hebel auf die Abstände der Verbindungspunkte 24, 26, zur Kraftübertragungsrichtung bezieht, d.h. bei der Verbindung zwischen dem ersten und dem zweiten Punkt zur Kraftübertragung 12, 14, d.h. im Bereich der Aktuatoren zur Erzeugung der Steuerkraft, sind auf beiden Seiten unterschiedliche Hebel ausgebildet, die jedoch über das Verbindungselement in direkter Wechselwirkung stehen. Dies ist beispielsweise dann von Vorteil, wenn es zu einer reduzierten Leistung eines der Aktuatoren, jedoch nicht zu einem Komplettausfall des Aktuators kommt. Wenn nun ein Aktuator einen Leistungsabfall aufweist, der mittels der Überwachungseinrichtung detektiert wird, kann die Bewegung der Kopplungseinrichtung so weit erfolgen, dass das unterschiedliche Hebelverhältnis die unterschiedlichen Leistungen der beiden Aktuatoren, d.h. deren Leistungsverhältnis, abbildet.

Im Folgenden soll mit Hilfe der Figuren 9f. auf Ausführungsbeispiele eines erfindungsgemäßen Verfahrens eingegangen werden.

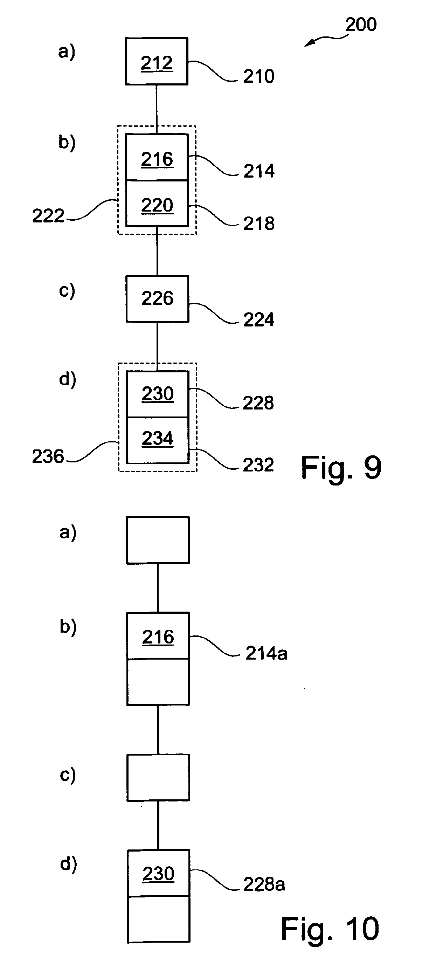

In Fig. 9 sind schematisch die wesentlichen Schritte eines erfindungsgemäßen Verfahrens 200 zum Umschalten von einem ersten Übertragungsmodus in einen zweiten Übertragungsmodus zur Betätigung einer Steuerungskomponente in einem Fahrzeug gezeigt, wobei zur Übertragung einer Steuerungskraft eine Übertragungsvorrichtung nach einer der vorhergehend beschriebenen Ausführungsbeispiele und Aspekte vorgesehen ist. Das Verfahren 200 umfasst die folgenden Schritte:
- In einem ersten Anordnungsschritt 210 wird der zweite Kraftübertragungspunkt in einer Normalstellung 212 angeordnet, in der eine von dem wenigstens einen Element zur Längenveränderung bewirkte Längenveränderung auf den zweiten Kraftübertragungspunkt übertragbar ist.
- In einem weiteren Schritt ist das Erzeugen 214 einer Steuerungskraft 216 durch eine Steuerkrafterzeugungsvorrichtung und das Übertragen 218 der Steuerungskraft in einem ersten Modus 220 vorgesehen, bei dem der zweite Kraftübertragungspunkt in der Normalstellung angeordnet ist, und bei dem die Steuerungskraft durch wenigstens das Element zur Längenveränderung bzw. den Aktuator in dem ersten Seitenelement erzeugt wird. Da das Erzeugen 214 und das Übertragen 218 unmittelbar in Zusammenhang stehen, sind die einzelnen Aspekte in einem gemeinsamen Schritt zusammengefasst, was durch ein gestricheltes Rechteck 222 angedeutet ist.
- In einem weiteren Schritt erfolgt eine Verlagerung 224 des Verbindungselements derart, dass der zweite Kraftübertragungspunkt in einer Redundanzstellung 226 angeordnet ist, in der bei Fehlfunktion eines Aktuators in einem der Seitenelemente die Steuerungskraft durch das andere der beiden Seitenelemente auf den zweiten Kraftübertragungspunkt übertragbar ist.
- Weiter ist eine Erzeugung 228 einer Steuerungskraft 230 durch eine Steuerkrafterzeugungsvorrichtung und eine Übertragung 232 der Steuerungskraft in einem zweiten Modus 234 vorgesehen, bei dem der zweite Kraftübertragungspunkt in der Redundanzstellung angeordnet ist. Da die Erzeugung der Steuerungskraft und die Übertragung der Steuerungskraft, d.h. die Unterschritte 228, 232 ebenfalls in einem unmittelbaren Zusammenhang stehen, sind auch diese mit einem gestrichelten Rechteck 236 zusammengefasst.

Das Anordnen 210 wird auch als Schritt a) bezeichnet, das Erzeugen 214 und die Übertragung 218 als Schritt b), die Verlagerung 224 als Schritt c) sowie das Erzeugen 228 und die Übertragung 232 als Schritt d).

Gemäß einem weiteren Aspekt der Erfindung, dargestellt in Fig. 10, ist das zweite Seitenelement starr ausgebildet, und in dem ersten Modus in Schritt b) wird die Steuerungskraft 216 durch den Aktuator in dem ersten Seitenelement erzeugt, was mit dem Bezugszeichen 214a angedeutet ist. Weiter ist vorgesehen, dass in dem zweiten Modus in Schritt d) die Steuerungskraft 230 durch eine Betätigungsvorrichtung erzeugt wird, die außerhalb der Übertragungsvorrichtung vorgesehen ist, was mit dem Bezugszeichen 228a angedeutet ist.

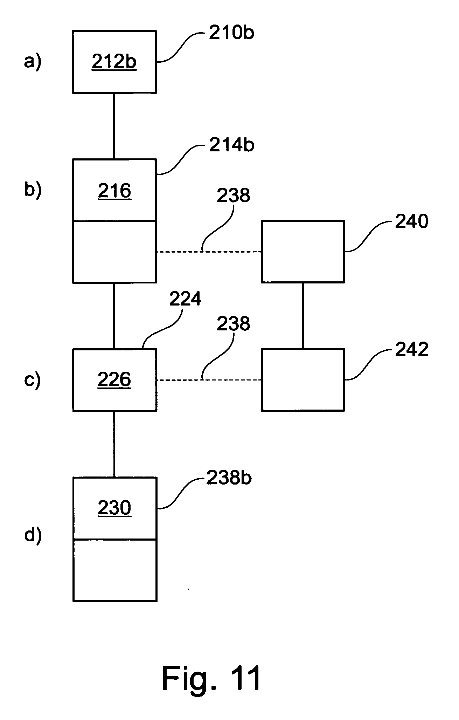

Gemäß einem weiteren Ausführungsbeispiel der Erfindung, dargestellt in Fig. 11, weist auch das zweite Seitenelement einen Aktuator zur Längenveränderung des Seitenelements auf, und der zweite Kraftübertragungspunkt ist in wenigstens einer dritten Stellung einstellbar, bei der die Kraftübertragung in einem Bereich erfolgt, der in der Mitte zwischen dem ersten und dem zweiten Verbindungspunkt liegt. Das Anordnen des zweiten Kraftübertragungspunkts in der dritten Stellung ist mit dem Bezugszeichen 210b angedeutet und die dritte Stellung mit dem Bezugszeichen 212b. Außerdem ist vorgesehen, dass in dem ersten Modus in Schritt b) die Steuerungskraft durch beide Aktuatoren erzeugt wird, was durch das Bezugszeichen 214b angedeutet ist.

Außerdem wird in dem zweiten Modus in Schritt d) die Steuerungskraft durch nur einen der beiden Aktuatoren erzeugt, was mit der Bezugsziffer 238b angedeutet ist.

Gemäß einem weiteren Aspekt der Erfindung, der ebenfalls in Fig. 11 dargestellt ist, jedoch nicht zwingend mit den oberhalb beschriebenen Merkmalen bzw. der Ausführungsform des Verfahrens kombiniert werden muss, was durch gestrichelte Verbindungslinien 238 angedeutet ist, erfolgt während der Übertragung 218 der Steuerungskraft in Schritt b) eine Überwachung 240 der beiden Aktuatoren. Bei einer Fehlfunktion eines der beiden Aktuatoren wird ein Stellelement aktiviert, was mit dem Bezugszeichen 242 angedeutet ist, wobei mit dem Stellelement das Verlagern in Schritt c) in die Redundanzstellung 226 ausgeführt wird. Das Verlagern mittels des Stellelements ist mit dem Bezugszeichen 224c angedeutet.

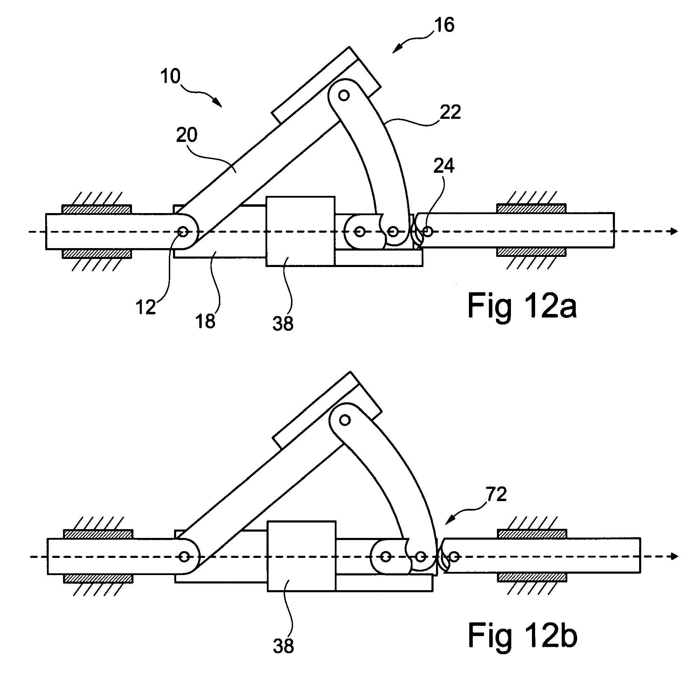

In Fig. 12 ist ein weiteres Ausführungsbeispiel einer erfindungsgemäßen Übertragungsvorrichtung gezeigt, wobei gleiche Merkmale mit gleichen Bezugszeichen versehen sind und auf diese Merkmale nicht näher eingegangen werden soll, um unnötige Wiederholungen zu vermeiden. In Fig. 12a ist das erste Seitenelement 18 in einer Minimallänge und in Fig. 12b in einer Maximallänge gezeigt, d.h., der Aktuator ist in Fig. 12b dahingehend aktiviert, dass er eine Längenveränderung bewirkt hat.

Die Kopplungseinrichtung 16 ist schematisch durch einfache lineare Elemente dargestellt, wobei zur Führung des Verbindungselements 22 zwei Kugellager 76 am Ende der Steuerstange im Bereich des zweiten Kraftübertragungspunkts vorgesehen sind, wobei diese Führung durch einen Schnitt durch die Stange in der Zeichnung sichtbar gemacht wurde und mit Bezugszeichen 72 gekennzeichnet ist.

In Fig. 12a und 12b befindet sich das erste Seitenelement mit dem Aktuator 38 in Serie, d.h. zwischen dem ersten und dem zweiten Kraftübertragungspunkt 12, 14.

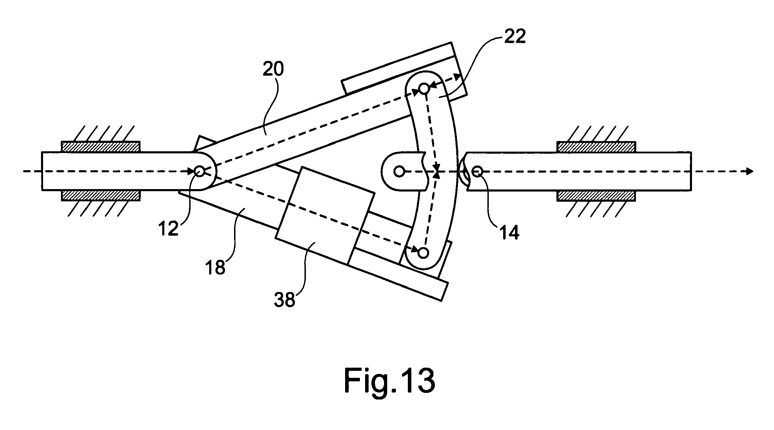

Kommt es nun zu einem Ausfall des Aktuators 38, so kann die Kopplungseinrichtung 16 derart verschwenkt werden, dass das zweite Seitenelement 20 anstelle des ersten Seitenelements 18 zwischen dem ersten und dem zweiten Kraftübertragungspunkt 12, 14 angeordnet ist. In Fig. 13 ist zu diesem Bewegungsvorgang eine Zwischenstellung dargestellt.

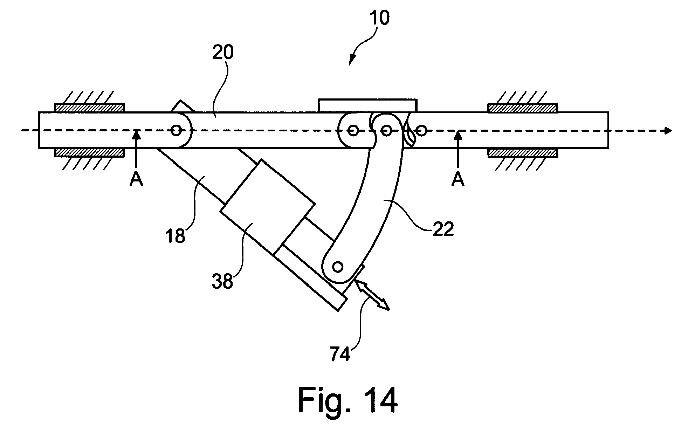

In Fig. 14 ist der bereits erwähnte Zustand dargestellt, bei dem das zweite Seitenelement 20 in Reihe geschaltet ist, so dass eine Kraftübertragung möglich ist, wobei zur Kraftübertragung in diesem Fall die bereits erwähnte Krafteinleitung auβerhalb der Übertragungsvorrichtung 10 vorgesehen ist, beispielsweise durch einen Steuerknüppel.

In dieser Position ist das Verbindungselement 22 nur an seinem, in Fig. 14, oberen Ende gehalten, und das untere Ende ist in Längsrichtung des ersten Seitenelements 18 frei beweglich, was mit einem Doppelpfeil 74 angedeutet ist.

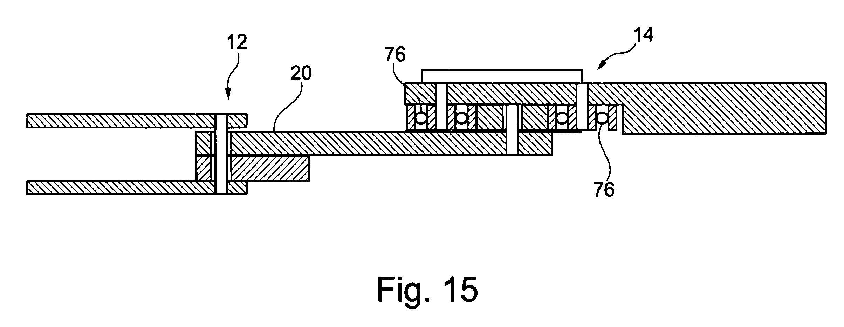

In Fig. 15 ist eine Schnittdarstellung entlang der Schnittlinien A-A in Fig. 14 gezeigt, wobei ersichtlich ist, dass das zweite Seitenelement 20 aus einem einfachen Längsprofil vorgesehen ist und die Verbindungspunkte zur Gewährleistung der Beweglichkeit mit Kugellagern 76 ausgebildet sind.

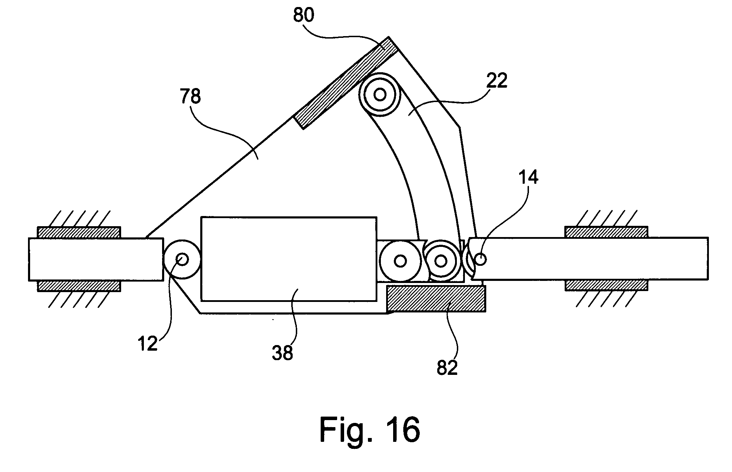

In Fig. 16 ist eine weitere Ausführungsform gezeigt, bei der anstelle des zweiten Seitenelements 20 eine Grundplatte 78 vorgesehen ist, die an ihrem einen Ende an dem ersten Kraftübertragungspunkt 12 drehbeweglich gehalten ist, wobei an dieser Stelle auch der Aktuator 38 angelenkt ist. Die Grundplatte weist einen ersten Anschlag 80 und einen zweiten Anschlag 82 auf, wobei zwischen den beiden Anschlägen das Verbindungselement 22 vorgesehen ist, das an seinem oberen Ende mit der Grundplatte verbunden ist und an seinem unteren Ende mit dem Aktuator 38. Selbstverständlich sind die Verbindungen drehbeweglich ausgebildet. Der untere Anschlag 82 gewährleistet, dass in dieser Stellung der Aktuator 38 in Reihe angeordnet ist. Bei einem Hinabschwenken der Grundplatte 78 kommt es dann zu einem Anschlag des Steuerstangenelements im Bereich des zweiten Kraftübertragungspunkts 14 mit dem oberen Anschlag 80, so dass in dieser Stellung die Übertragung durch die Grundplatte erfolgen kann.

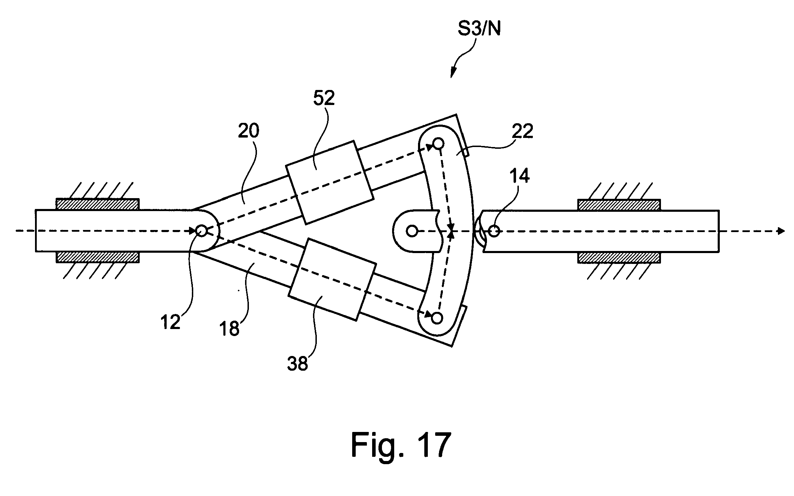

In Fig. 17 ist in einer Darstellung ähnlich zu den Figuren 12f. ein weiteres Ausführungsbeispiel gezeigt, bei dem auch in dem zweiten Seitenelement 20 ein Aktuator vorgesehen ist, wie dies bereits in den Figuren 5 bis 8 schematisch gezeigt worden ist. Fig. 17 zeigt die sogenannte Normalstellung, bei der die beiden Aktuatoren parallel zueinander wirken.

Bei Ausfall beispielsweise des zweiten Aktuators 52 wird die Kopplungseinrichtung 16 derart verschwenkt, dass der erste Aktuator 38 in Serie zwischen dem ersten Kraftübertragungspunkt 12 und dem zweiten Kraftübertragungspunkt 14 angeordnet ist.

Die oberhalb beschriebenen Ausführungsbeispiele können in unterschiedlicher Art und Weise kombiniert werden. Insbesondere können auch Aspekte der Vorrichtungen für Ausführungsformen des Verfahrens sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Übertragungsvorrichtung (10) zur Übertragung einer Steuerungskraft in einem Fahrzeug, mit
- einem ersten Kraftübertragungspunkt (12);
- einem zweiten Kraftübertragungspunkt (14); und
- einer zwischen dem ersten und dem zweiten Kraftübertragungspunkt angeordneten Kopplungseinrichtung (16);
wobei die Kopplungseinrichtung ein erstes Seitenelement (18), ein zweites Seitenelement (20) und ein Verbindungselement (22) aufweist;
wobei das erste und das zweite Seitenelement mit jeweils einem Ende (18a, 20a) mit dem ersten Kraftübertragungspunkt drehbeweglich verbunden sind, und mit ihrem jeweils anderen Ende (18b, 20b) mit dem Verbindungselement an einem ersten (24) bzw. zweiten Verbindungspunkt (26) drehbeweglich verbunden sind; wobei der erste und der zweite Verbindungspunkt an dem Verbindungselement voneinander beabstandet (D) sind;
wobei wenigstens das erste Seitenelement ein Element (28) zur Längenveränderung des Seitenelements aufweist; und
wobei der zweite Kraftübertragungspunkt an dem Verbindungselement vorgesehen ist und wenigstens zwischen einer ersten (P1) und einer zweiten Position (P2) einstellbar ist, wobei der zweite Kraftübertragungspunkt in der ersten Position im Bereich des ersten Verbindungspunkts und in der zweiten Position im Bereich des zweiten Verbindungspunkts angeordnet ist.

2. Übertragungsvorrichtung nach Anspruch 1, wobei das Element zur Längenveränderung ein Aktuator (38) ist.

3. Übertragungsvorrichtung nach Anspruch 1 oder 2, wobei das jeweils eine Ende des ersten und des zweiten Seitenelements an einem gemeinsamen Haltepunkt (42) an dem ersten Kraftübertragungspunkt gehalten sind.

4. Übertragungsvorrichtung nach Anspruch 1, 2 oder 3, wobei das Verbindungselement einen Kreisbogen (44) bildet, wobei der Mittelpunkt (46) des Kreisbogens im Bereich des gemeinsamen Haltepunkts liegt.

5. Übertragungsvorrichtung nach einem der vorhergehenden Ansprüche, wobei das zweite Seitenelement starr ausgebildet ist;
wobei die Kopplungseinrichtung zwischen einer ersten Stellung (S1) und einer zweiten Stellung (S2) beweglich ist;
wobei in der ersten Stellung eine Kraftübertragung am zweiten Kraftübertragungspunkt in einem Bereich erfolgt, der fluchtend zu der Verbindung des ersten Seitenelements mit dem ersten Kraftübertragungspunkt und dem ersten Verbindungspunkt angeordnet ist; und
wobei in der zweiten Stellung eine Kraftübertragung in einem Bereich erfolgt, der fluchtend zu der Verbindung des zweiten Seitenelements mit dem ersten Kraftübertragungspunkt und dem zweiten Verbindungspunkt angeordnet ist.

6. Übertragungsvorrichtung nach Anspruch 5, wobei in der ersten Stellung die Steuerungskraft in der Übertragungsvorrichtung durch den Aktuator erzeugt wird; und wobei in der zweiten Stellung die Steuerungskraft durch eine Betätigungsvorrichtung (48) erzeugt wird, die außerhalb der Übertragungsvorrichtung vorgesehen ist.

7. Übertragungsvorrichtung nach einem der Ansprüche 1 bis 4, wobei auch das zweite Seitenelement einen Aktuator (52) zur Längenveränderung des Seitenelements aufweist; und
wobei wenigstens eine dritte Stellung (S3, N) vorgesehen ist, bei der die Kraftübertragung in einem Bereich erfolgt, der in der Mitte zwischen dem ersten und dem zweiten Verbindungspunkt liegt.

8. Übertragungsvorrichtung nach Anspruch 7, wobei die dritte Stellung die Normalstellung bildet, in der beide Aktuatoren zur Erzeugung der Steuerkraft betätigt werden; und wobei die erste (S1) und die zweite Stellung (S2) jeweils eine Redundanzstellung (R1, R2) bilden, in der jeweils nur einer der beiden Aktuatoren die Steuerkraft erzeugt.

9. Luftfahrzeug (100) mit einem Steuerungssystem (112) zur Betätigung einer Steuerungskomponente; wobei das Steuerungssystem aufweist:
- eine Eingabevorrichtung (114) zur Eingabe des Steuerbefehls;
- eine Steuerkrafterzeugungsvorrichtung (114);
- ein Übertragungssystem (116) zur Übertragung der Steuerkraft; und
- wenigstens eine flugtechnische Steuerungskomponente (118);
wobei das Übertragungssystem wenigstens eine Übertragungsvorrichtung (120) nach einem der vorhergehenden Ansprüche aufweist.

10. Verwendung einer Übertragungsvorrichtung nach einem der Ansprüche 1 bis 8 in einem Luftfahrzeug.

11. Verwendung nach Anspruch 10, wobei das Luftfahrzeug eine wenigstens teilweise Fly-by-wire Flugsteuerung aufweist.

12. Verfahren (200) zum Umschalten von einem ersten Übertragungsmodus in einen zweiten Übertragungsmodus zur Betätigung einer Steuerungskomponente in einem Fahrzeug, wobei zur Übertragung einer Steuerungskraft eine Übertragungsvorrichtung nach einem der Ansprüche 1 bis 8 vorgesehen ist, wobei das Verfahren die folgenden Schritte umfasst:
a) Anordnen (210) des zweiten Kraftübertragungspunkts in einer Normalstellung (212), in der eine von dem wenigstens einen Aktuator bewirkte Längenveränderung auf den zweiten Kraftübertragungspunkt übertragbar ist;
b) Erzeugen (214) einer Steuerungskraft (216) durch eine Steuerkrafterzeugungsvorrichtung und Übertragen (218) der Steuerungskraft in einem ersten Modus (220), bei dem der zweite Kraftübertragungspunkt in der Normalstellung angeordnet ist, und bei dem die Steuerungskraft durch wenigstens den Aktuator in dem ersten Seitenelement erzeugt wird;
c) Verlagern (224) des Verbindungselements derart, dass der zweite Kraftübertragungspunkt in einer Redundanzstellung (226) angeordnet ist, in der bei Fehlfunktion eines Aktuators in einem der Seitenelemente die Steuerungskraft durch das andere der beiden Seitenelemente auf den zweiten Kraftübertragungspunkt übertragbar ist;
d) Erzeugen (228) einer Steuerungskraft (230) durch eine Steuerkrafterzeugungsvorrichtung und Übertragen (232) der Steuerungskraft in einem zweiten Modus (234), bei dem der zweite Kraftübertragungspunkt in der Redundanzstellung angeordnet ist.

13. Verfahren nach Anspruch 12, wobei das zweite Seitenelement starr ausgebildet ist;
wobei in dem ersten Modus in Schritt b) die Steuerungskraft durch den Aktuator in dem ersten Seitenelement erzeugt wird (214a); und
wobei in dem zweiten Modus in Schritt d) die Steuerungskraft durch eine Betätigungsvorrichtung erzeugt wird (228a), die außerhalb der Übertragungsvorrichtung vorgesehen ist.

14. Verfahren nach Anspruch 12, wobei auch das zweite Seitenelement einen Aktuator zur Längenveränderung des Seitenelements aufweist;
wobei der zweite Kraftübertragungspunkt in wenigstens einer dritten Position (212b) einstellbar ist, bei der die Kraftübertragung in einem Bereich erfolgt, der in der Mitte zwischen dem ersten und dem zweiten Verbindungspunkt liegt;
wobei in dem ersten Modus in Schritt b) die Steuerungskraft durch beide Aktuatoren erzeugt wird (214b); und
wobei in dem zweiten Modus in Schritt d) die Steuerungskraft durch nur einen der beiden Aktuatoren erzeugt wird (228b).

15. Verfahren nach Anspruch 14, wobei während der Übertragung der Steuerungskraft in Schritt b) eine Überwachung (240) der beiden Aktuatoren erfolgt; und wobei bei einer Fehlfunktion eines der beiden Aktuatoren ein Stellelement aktiviert (242) wird, mit welchem das Verlagern nach Schritt c) ausgeführt wird (224c).

## Claims

1. Transmitting device (10) for transmitting a steering force in a vehicle, having
- a first force-transmitting point (12);
- a second force-transmitting point (14); and
- a coupling device (16) which is arranged between the first and second force-transmitting points;
wherein the coupling device has a first side element (18), a second side element (20) and a connecting element (22);
wherein the first and second side elements are connected by one end (18a, 20a) in each case to the first force-transmitting point in a rotationally movable fashion, and are connected by their respective other end (18b, 20b) to the connecting element at a first connecting point (24) or a second connecting point (26) in a rotationally movable fashion; wherein the first and second connecting points are spaced apart from one another (D) at the connecting element;
wherein at least the first side element has an element (28) for changing the length of the side element; and
wherein the second force-transmitting point is provided on the connecting element and can be adjusted at least between a first position (P1) and a second position (P2), wherein in the first position the second force-transmitting point is arranged in the region of the first connecting point, and in the second position is arranged in the region of the second connecting point.

2. Transmitting device according to Claim 1, wherein the element for changing the length is an actuator (38).

3. Transmitting device according to Claim 1 or 2, wherein the respective one end of the first and of the second side element is secured to a common securing point (42) on the first force-transmitting point.

4. Transmitting device according to Claim 1, 2 or 3, wherein the connecting element forms an arc (44), wherein the centrepoint (46) of the arc lies in the region of the common securing point.

5. Transmitting device according to one of the preceding claims, wherein the second side element is of rigid design;
wherein the coupling device can move between a first position (81) and a second position (S2);
wherein in the first position force is transmitted at the second force-transmitting point in a region which is arranged flush with the connection of the first side element to the first force-transmitting point and the first connecting point; and
wherein in the second position force is transmitted in a region which is arranged flush with the connection of the second side element to the first force-transmitting point and the second connecting point.

6. Transmitting device according to Claim 5, wherein in the first position the control force in the transmitting device is generated by means of the actuator; and wherein in the second position the control force is generated by an activation device (48) which is provided outside the transmitting device.

7. Transmitting device according to one of Claims 1 to 4, wherein the second side element also has an actuator (52) for changing the length of the side element; and
wherein at least a third position (S3, N) is provided at which the force transmission takes place in a region which lies in the centre between the first and second connecting points.

8. Transmitting device according to Claim 7, wherein the third position forms the normal position in which both actuators are activated in order to generate the control force, and wherein the first position (S1) and the second position (S2) each form a redundancy position (R1, R2) in which in each case just one of the two actuators generates the control force.

9. Aircraft (100) having a control system (112) for activating a control component; wherein the control system has:
- an input device (114) for inputting the control instruction;
- a control force-generating device (114);
- a transmitting device (116) for transmitting the control force; and
- at least one aeronautical control component (118);
wherein the transmission system has at least one transmitting device (120) according to one of the preceding claims.

10. Use of a transmitting device according to one of Claims 1 to 8 in an aircraft.

11. Use according to Claim 10, wherein the aircraft has an at least partial fly-by-wire flight controller.

12. Method (200) for switching over from a first transmission mode into a second transmission mode for activating a control component in a vehicle, wherein in order to transmit a control force a transmitting device according to one of Claims 1 to 8 is provided, wherein the method comprises the following steps:
a) arranging (210) the second force-transmitting point in a normal position (212) in which a change of length which is brought about by the at least one actuator can be transmitted to the second forcetransmitting point;
b) generating (214) a control force (216) by means of a control force-generating device and transmitting (218) the control force in a first mode (220), in which the second force-transmitting point is arranged in the normal position, and in which the control force is generated by at least the actuator in the first side element;
c) moving (224) the connecting element in such a way that the second force-transmitting point is arranged in a redundancy position (226) in which, in the event of a malfunction of an actuator in one of the side elements, the control force can be transmitted to the second force-transmitting point by the other side element of the two side elements;
d) generating (228) a control force (230) by means of a control force-generating device and transmitting (232) the control force in a second mode (234) in which the second force-transmitting point is arranged in the redundancy position.

13. Method according to Claim 12, wherein the second side element is of rigid design;
wherein in the first mode in step b) the control force is generated (214a) by the actuator in the first side element; and
wherein in the second mode in step d) the control force is generated (228a) by an activation device which is provided outside the transmitting device.

14. Method according to Claim 12, wherein the second side element also has an actuator for changing the length of the side element;
wherein the second force-transmitting point can be set in at least a third position (212b) in which the force transmission takes place in a region which lies in the centre between the first and second connecting points;
wherein in the first mode in step b) the control force is generated (214b) by both actuators; and
wherein in the second mode in step d) the control force is generated (228b) by just one of the two actuators.

15. Method according to Claim 14, wherein during the transmission of the control force in step b) the two actuators are monitored (240); and wherein in the event of a malfunction of one of the two actuators an actuating element, with which the movement according to step c) is carried out (224c), is activated (242).

## Revendications

1. Dispositif de transmission (10) qui transmet une force de commande dans un véhicule, le dispositif présentant
un premier point (12) de transmission de force,
un deuxième point (14) de transmission de force et
un dispositif d'accouplement (16) disposé entre le premier et le deuxième point de transmission de force,
le dispositif d'accouplement présentant un premier élément latéral (18), un deuxième élément latéral (20) et un élément de liaison (22),
le premier et le deuxième élément latéraux étant raccordés à rotation chacun au premier point de transmission de force par une extrémité (18a, 20a) et par leur autre extrémité (18b, 20b) un premier point de liaison (24) et un deuxième point de liaison (26) de l'élément de liaison,
le premier et le deuxième point de liaison étant situés à une distance mutuelle (D) sur l'élément de liaison,
au moins le premier élément latéral présentant un élément (28) de modification de la longueur de l'élément latéral et
le deuxième point de transmission de force étant prévu sur l'élément de liaison et pouvant être ajusté au moins entre une première position (P1) et une deuxième position (P2),
le deuxième point de transmission de force étant disposé dans la première position au niveau du premier point de liaison et dans la deuxième position au niveau du deuxième point de liaison.

2. Dispositif de transmission selon la revendication 1, dans lequel l'élément de modification de longueur est un actionneur (38).

3. Dispositif de transmission selon les revendications 1 ou 2, dans lequel l'extrémité du premier et du deuxième élément latéral est maintenue en un point commun de maintien (42) sur le premier point de transmission de force.

4. Dispositif de transmission selon les revendications 1, 2 ou 3, dans lequel l'élément de liaison forme un arc de cercle (44), le centre (46) de l'arc de cercle étant situé au niveau du point de maintien commun.

5. Dispositif de transmission selon l'une des revendications précédentes, dans lequel
le deuxième élément latéral est rigide,
le dispositif d'accouplement peut se déplacer entre une première position (S1) et une deuxième position (S2),
dans la première position, un transfert de force sur le deuxième point de transmission de force a lieu à un niveau aligné sur la liaison du premier élément latéral avec le premier point de transmission de force et le premier point de liaison, tandis que dans la deuxième position, le transfert de force a lieu à un niveau aligné sur la liaison entre le deuxième élément latéral avec le premier point de transmission de force et le deuxième point de liaison.

6. Dispositif de transmission selon la revendication 5, dans lequel dans la première position, la force de commande est formée dans le dispositif de transmission par l'actionneur, tandis que dans la deuxième position, la force de commande est formée par un dispositif d'actionnement (48) prévu à l'extérieur du dispositif de transmission.

7. Dispositif de transmission selon l'une des revendications 1 à 4, dans lequel le deuxième élément latéral présente également un actionneur (52) qui modifie la longueur de l'élément latéral et en ce qu'au moins une troisième position (S3, N) dans laquelle le transfert de force a lieu à un niveau situé au milieu entre le premier et le deuxième point de liaison est prévue.

8. Dispositif de transmission selon la revendication 7, dans lequel la troisième position forme la position normale dans laquelle les deux actionneurs sont actionnés pour exercer la force de commande, la première position (S1) et la deuxième position (S2) formant chacune une position redondante (R1, R2) dans laquelle seul l'un des deux actionneurs exerce la force de commande.

9. Aéronef (100) doté d'un système de commande (112) destiné à actionner un composant de commande, le système de commande présentant :
un dispositif d'introduction (114) qui introduit un ordre de commande,
un dispositif (114) de formation d'une force de commande,
un système de transmission (116) qui transmet la force de commande et
au moins un composant de commande aéronautique (118),
le système de transmission présentant au moins un dispositif de transmission (120) selon l'une des revendications précédentes.

10. Utilisation d'un dispositif de transmission selon l'une des revendications 1 à 8 dans un aéronef.

11. Utilisation selon la revendication 10, dans laquelle l'aéronef présente une commande de vol au moins partielle de type "fly-by-wire" (commande électronique de vol).

12. Procédé (200) de commutation d'un premier mode de transmission en un deuxième mode de transmission en vue d'actionner un composant de commande dans un véhicule, un dispositif de transmission selon l'une des revendications 1 à 8 étant prévu pour la transmission d'une force de commande, et le procédé comportant les étapes suivantes :
a) placement (210) du deuxième point de transmission de force en une position normale (212) dans laquelle une modification de longueur réalisée par au moins un actionneur peut être transmise au deuxième point de transmission de force,
b) application (214) d'une force de commande (216) par un dispositif de formation de force de commande et transmission (218) de la force de commande en un premier mode (220) dans lequel le deuxième point de transmission de force est disposé dans la position normale et dans lequel la force de commande est formée par au moins un actionneur du premier élément latéral,
c) déplacement (224) de l'élément de liaison de telle sorte que le deuxième point de transmission de force soit disposé dans une position redondante (226) dans laquelle, en cas de défaut de fonctionnement d'un actionneur de l'un des éléments latéraux, la force de commande puisse être transmise au deuxième point de transmission de force par l'autre des deux éléments latéraux et
d) application (228) d'une force de commande (230) par un dispositif d'application de force de commande et transmission (232) de la force de commande dans un deuxième mode (234) dans lequel le deuxième point de transmission de force est disposé en position redondante.

13. Procédé selon la revendication 12, dans lequel le deuxième élément latéral est rigide,
dans lequel dans le premier mode, la force de commande est appliquée à l'étape b) par l'actionneur du premier élément latéral (214a) et
dans lequel, dans le deuxième mode, la force de commande est appliquée à l'étape d) par un dispositif d'actionnement (228a) prévu à l'extérieur du dispositif de transmission.

14. Procédé selon la revendication 12, dans lequel le deuxième élément latéral présente également un actionneur de modification de longueur de l'élément latéral,
le deuxième point de transmission de force pouvant être placé dans au moins une troisième position (212b) dans laquelle la transmission de la force s'effectue à un niveau situé au milieu entre le premier et le deuxième point de liaison,
dans lequel, dans le premier mode, la force de commande est appliquée à l'étape b) par les deux actionneurs (214b) et
dans lequel, dans le deuxième mode, la force de commande est actionnée à l'étape d) par un seul des deux actionneurs (228b).

15. Procédé selon la revendication 14, dans lequel une surveillance (240) des deux actionneurs a lieu à l'étape b) et dans lequel pendant la transmission de la force de commande, un élément de réglage (242) par lequel le déplacement de l'étape c) est effectué (224c) est activé en cas de défaut de fonctionnement de l'un des deux actionneurs.
